# EUROPÄISCHE PATENTSCHRIFT

(11) **EP 2 433 870 B1**
(45) Veröffentlichungstag und Bekanntmachung des Hinweises auf die Patenterteilung: **22.07.2015**
(21) Anmeldenummer: 11182468.6
(22) Anmeldetag: 23.09.2011
(51) Int. Cl.: B64F 1/32

(54) **Verfahren zum Betrieb eines Flughafenfahrzeuges**
Method of operating an airport vehicle
Procédé de fonctionnement d'un véhicule aéroportuaire

(30) Priorität: 23.09.2010 DE 102010037723; 28.04.2011 DE 102011001594; 15.03.2011 DE 102011014128
(43) Veröffentlichungstag der Anmeldung: 28.03.2012
(73) Patentinhaber: Losch Airport Equipment GmbH, 70629 Stuttgart (DE)
(72) Erfinder: Werner, Losch, 70794 Filderstadt (DE)
(74) Vertreter: Jeck, Anton

(56) Entgegenhaltungen:
- DE-U1- 9 005 884
- US-A1- 2006 055 520

## Beschreibung

Die Erfindung betrifft ein Flughafenfahrzeug, wie beispielsweise einen Förderbandwagen zum Beladen von Flugzeugen, nach dem Oberbegriff des Anspruchs 1. Die Erfindung betrifft auch ein Verfahren zum Betrieb eines solchen Flughafenfahrzeugs gemäß dem Oberbegriff des Anspruchs 10, insbesondere zur Annäherung eines Flughafenfahrzeugs an ein Flugzeug.

Flughafenfahrzeuge dienen allgemein dem Umgang mit nachfolgend unter dem Begriff Flugzeug zusammengefasst bezeichneter Luftfahrzeuge, wie beispielsweise als Passagier-, Transport-, Rettungs-, Militärflugzeuge ausgeführte Standardflugzeugtypen mit Tragflächen, Helikopter, Luftschiffe und Ballone, sowie Sonderflugzeugtypen, wie etwa Großraumflugzeugtypen mit vergrößerter Reichweite. Solche Flughafenfahrzeuge können mit verschiedenen Aufbauten versehen werden, beispielsweise als Cateringfahrzeuge mit anhebbaren Kofferaufbauten, Schlepper mit verstellbaren, beispielsweise an Bugrädern von Flugzeugen einklinkbaren Greifern, Tankfahrzeuge mit einem oder mehreren, gegebenenfalls auswechselbaren Tanks für Kerosin und Flugbenzin, als Gangway- oder Flugzeugtreppenfahrzeuge bezeichnete, motorisierte Selbstfahrlafetten mit einer in Höhe, Neigung und Ausladung verstellbar auf der Selbstfahrlafette angeordneten Gangway bzw. Flugzeugtreppe, oder auch als Förderbandwagen bezeichnete, motorisierte Selbstfahrfafetten mit einem zum Be- und Entladen von Flugzeugen vorgesehenen, ebenfalls beispielsweise in Höhe, Neigung und Ausladung verstellbar auf der Selbstfahrlafette angeordneten Förderband ausgestaltet sein. Darüber hinaus sind auch noch Flughafenfahrzeuge oder Selbstfahrlafetten mit anderen Aufbauten, wie etwa Hubbühnen beispielsweise zum Be- und Entladen und/oder zu Wartungszwecken bekannt. Bei einer Selbstfahrlafette handelt es sich beispielsweise um ein Fahrgestell, bestehend aus einem mit Motor, Getriebe, Fahrstand, und gegebenenfalls Führerhaus versehenen Chassis eines Sonder- oder Serienkraftfahrzeugs.

Der Umgang mit einem Flugzeug betrifft beispielsweise das Be- und Entladen, das Ver- und Entsorgen, das Be- und Enttanken, die Ermöglichung des Ein- und Ausstiegs, das Schleppen und Schieben. Wichtig ist hervorzuheben, dass diese Aufzählung keinen Anspruch auf Vollständigkeit hat.

Als Förderbandwagen ausgebildete Flughafenfahrzeuge werden beispielsweise von der Firma MULAG unter dem Namen "Orbiter" hergestellt und vertrieben. Sie sind jeweils mit einem Aufbau ausgestattet, der ein an die Ladehöhe des jeweiligen Flugzeugtyps anpassbares Förderband zur Be- und Entladung von verschiedenen Flugzeugtypen umfasst.

Ein Flughafenfahrzeug zum Be- und Entladen sowie zur Ermöglichung des Ein- und ausstiegs ist durch EP 1 161 365 B1 bekannt. Dieses besteht aus einem erwähnten Fahrgestell mit einem vom Bodenniveau auf das Niveau eines Zugangs zu einem Flugzeug anhebbaren und wieder absenkbaren, mit einer Tür versehenen Aufbau, welcher einen Führerstand des Flughafenfahrzeugs sowie einen Lade- und/oder Passagierraum umfasst.

Ein Nachteil dieser Flughafenfahrzeuge besteht darin, dass der Fahrer des Flughafenfahrzeugs besonders Obacht geben muss, dass der Aufbau des Flughafenfahrzeugs, beispielsweise bei einem Förderbandwagen das über den Wagen nach vorn stehende Förderband, nicht mit dem Flugzeug kollidiert.

Dies hat eine erhebliche Beeinträchtigung der Verkehrssicherheit sowohl der auf dem Vorfeld eines Flughafens abgestellten Flugzeuge, als auch der mit einem Aufbau zum Umgang mit einem Flugzeug vorgesehenen Flughafenfahrzeuge zur Folge.

Es ist an sich bekannt, Hindernisse im Umfeld eines Straßenfahrzeugs, beispielsweise durch Abstandsmessungen beispielsweise mittels auf Höhe der Stoßstangen des Straßenfahrzeugs angeordneten Ultraschallsensoren, zu erkennen bzw. zu erfassen.

Zur Verbesserung der Verkehrssicherheit von Straßenfahrzeugen im fließenden Verkehr ist durch DE 197 30 366 A1 eine Steuereinrichtung zum Steuern von Signaleinrichtungen eines Straßenfahrzeugs bekannt, welche bei einer ermittelten, drohenden Unfallgefahr eine Mehrzahl von Signaleinrichtungen des Straßenfahrzeugs aktiviert, beispielsweise zusätzlich zu einer Aktivierung von Warnblinkleuchten wenigstens zwei weitere zur Serienausstattung des Straßenfahrzeugs gehörende Signaleinrichtungen. Die drohende Unfallgefahr kann ermittelt werden:
- aus der Geschwindigkeit des eigenen Straßenfahrzeugs,
- der Geschwindigkeit und/oder Beschleunigung des Niederdrückens des Bremspedals während eines Bremsvorgangs,
- der Geschwindigkeit und/oder Beschleunigung des Niederdrückens oder Loslassens des Gaspedals,
- einer Aktivierung eines Bremsassistenten,
- einer Aktivierung einer Stabilitätssteuerung,
- einer Aktivierung eines Airbagsensors, sowie
- Messwerten eines Abstandsradars und/oder von Ultraschall-Parksensoren, mit denen die Geschwindigkeit eines vorausfahrenden Straßenfahrzeugs festgestellt werden kann, ebenso ob ein Sicherheitsabstand zu einem vorausfahrenden Straßenfahrzeug unterschritten wird, und ob bei den vorherrschenden Beschleunigungs- bzw. Verzögerungswerten des eigenen Straßenfahrzeugs und des vorausfahrenden Straßenfahrzeugs eine Kollisionsgefahr besteht.

Die Übertragbarkeit auf Flughafenfahrzeuge, welche zum Umgang mit auf dem Vorfeld abgestellten Flugzeugen vorgesehen sind, scheitert daran, dass kein nachfolgender Verkehr vor der Unfallgefahr gewarnt werden muss, da Flughafenfahrzeuge im Vergleich zu Straßenfahrzeugen aufgrund der strengen Regulierungen ohnehin nur mit vergleichsweise geringen Geschwindigkeiten und hohen Sicherheitsabständen zueinander bewegt werden dürfen. Stattdessen droht eine Unfallgefahr mit Partien abgestellter Flugzeuge, die weit nach vorn auskragend und/oder hoch oberhalb des Sitzplatzes außerhalb des Sichtfelds des Fahrers eines Flughafenfahrzeugs liegen. So ist beispielsweise bekannt, dass in der hinteren Stoßstange verbaute Ultraschallsensoren bei montierter Anhängerkupplung nicht mehr zuverlässig arbeiten.

Durch EP 1 642 767 A1 ist ein Einparksystem für Straßenkraftfahrzeuge bekannt, bei dem ein Fahrwiderstand des Fahrzeugs so ausgewertet wird, dass bei einer Änderung des Fahrwiderstands über ein vorgegebenes Maß auf eine Bordsteinberührung rück geschlossen wird.

Die Übertragbarkeit auf Flughafenfahrzeuge scheitert daran, dass bei einer Änderung des Fahrwiderstands bereits eine Berührung und damit eine potentielle Beschädigung eines Flugzeugs stattgefunden hat.

Durch US 20061055520 A1, die als nächstliegender Stand der Technik betrachtet wird, ist bekannt, bei der Annäherung eines Flughafenfahrzeugs an ein Flugzeug vorzusehen, dass Sensoren in den Antrieb des Flughafenfahrzeugs derart eingreifen, dass der Antrieb bei drohender Berührung des Flughafenfahrzeugs mit dem Flugzeug stillgesetzt wird. Dabei können zumindest an einem vorderen Endbereich des Aufbaus des Flughafenfahrzeugs Sensoren zur Feststellung des Abstands zu Flugzeugteilen angebracht sein. Die Sensoren können mit Anzeige- bzw. akustischen Geräten in einem Fahrerhaus des Flughafenfahrzeugs elektrisch verbunden sein. Die Sensoren können berührungsfrei beispielsweise als Ultraschallsensoren ausgebildet sein. Die Sensoren können unter verschiedenen Neigungswinkeln gegenüber dem Aufbau angeordnet sein. Die Neigungswinkel können zwischen 0° und 90° und/oder zwischen 90° und 180° aufweisen. Zumindest am vorderen Endbereich des Aufbaus können zusätzlich Sicherheitsschaltleisten angebracht seien. Das Flughafenfahrzeug kann als ein Förderbandwagen zum Beladen von Flugzeugen ausgeführt und mit einem auf dem Fahrzeug aufgebauten Förderband mit Förderbandträger ausgestattet ist, wobei an den vorderen Endbereichen des Förderbandträgers Sensoren zur Feststellung des Abstands zu Flugzeugteilen angebracht sind. Die Sensoren können unter verschiedenen Neigungswinkeln zwischen 0° und 90° zur Förderbandfläche angeordnet sein. Vom am Förderbandträger können zusätzlich Sicherheitsschaltleisten angebracht sein.

Durch DE 90 05 884 U1 ist bekannt, ein Flughafenfahrzeug mit Näherungssensoren auszurüsten, welche eine Berührung der Bordwand eines Flugzeugs entbehrlich machen.

Eine Aufgabe der Erfindung besteht darin, ein Verfahren zum Betrieb eines Flughafenfahrzeugs zu entwickeln, mit dem die Verkehrssicherheit auf dem Vorfeld eines Flughafens nachhaltig erhöht wird.

Die Aufgabe wird mit den Merkmalen des unabhängigen Anspruchs gelöst.

Die Erfindung geht aus von einem Flughafenfahrzeug mit einem Aufbau zum Umgang mit einem Flugzeug, bei dem zumindest an einem vorderen Endbereich des Aufbaus Sensoren zur Feststellung des Abstands zu Flugzeugteilen angebracht sind.

Bei einem als Förderbandfahrzeug ausgeführten Flughafenfahrzeug können an den vorderen Endbereichen des Sicherheitsgeländers und/oder des Förderbandträgers Sensoren zur Feststellung des Abstands zu Flugzeugteilen angebracht sein. Diese Sensoren können dann den Fahrer auf einen drohenden Zusammenstoß aufmerksam machen.

Die Sensoren können mit Anzeige- bzw. akustischen Geräten in einem Fahrerhaus des Flughafenfahrzeugs elektrisch verbunden sein, so dass der Fahrer des Flughafenfahrzeugs sofort über den Abstand zu Flugzeugteilen informiert wird.

Die Sensoren können als Ultraschallsensoren ausgebildet sein.

Beispielsweise ist eine Verwendung von Ultraschallsensoren denkbar, welche anhand beispielsweise mehrerer Abstandssignale Position und/oder Orientierung eines oder mehrerer Flugzeugteile und/oder-partien erfassen können, um hieraus Position und Lage sowie gegebenenfalls eine sichere Annäherungstrajektorie des Flughafenfahrzeugs an das Flugzeug zu ermitteln bzw. abzuleiten.

Darüber hinaus ist die Verwendung magnetischer und/oder kapazitiver Sensoren denkbar, um Position und/oder Orientierung eines oder mehrerer Flugzeugteile und/oder -partien erfassen zu können.

Bei den Sensoren kann es sich alternativ oder zusätzlich um RADAR (Radio Detection And Ranging; Funkortung und -abstandsmessung) und/oder LIDAR (Light Detection And Ranging; optische Abstands- und Geschwindigkeitsmessung) Sensoren handeln. Im Allgemeinen handelt es sich bei den Sensoren um Abstandssensoren, deren Ausgangssignale proportional einem Abstand eines oder mehrerer Objekte vom Sensor ist.

Auch eine beliebige Kombination der beschriebenen Sensoren und Arten der Erfassung von Position und/oder Orientierung eines oder mehrerer Flugzeugteile und/oder -partien sind möglich. Hierdurch werden einerseits eine hohe Redundanz und andererseits eine hohe Güte der Erfassung durch Verifikation von auf unterschiedliche Arten ermittelter Abstände erzielt.

Die Sensoren können unter verschiedenen Neigungswinkeln zwischen 0° und 90° zur Horizontalen, im Falle von zur Anpassung an verschiedene Zugangshöhen von Flugzeugen in ihrer Neigung verstellbarer Aufbauten, wie etwa eines Förderbands, unter verschiedenen Neigungswinkeln zwischen 0° und 90° gegenüber einer neigbaren Seite des Aufbaus, beispielsweise gegenüber einer Förderbandfläche, angeordnet sein.

Mindestens ein zusätzlicher Sensor kann vorgesehen sein, dessen Längsachse einen Neigungswinkel zwischen 90° und 180° aufweist. Damit kann auch überhängenden Flugzeugteilen aus dem Weg gegangen werden.

Vom am Förderbandträger und am Sicherheitsgeländer können zusätzlich Sicherheitsschaltleisten angebracht sein.

Die Erfindung betrifft ein Verfahren zum Betrieb eines zuvor beschriebenen Flughafenfahrzeugs. Das Verfahren sieht vor, dass bei einer Annäherung des Flughafenfahrzeugs an das Flugzeug die Sensoren bzw. die dem erfassten Abstand proportionalen Ausgangssignale der Sensoren in den Antrieb des Flughafenfahrzeugs derart eingreifen, dass bei Unterschreitung eines bestimmten Abstands bzw. ab einem bestimmten Abstand von beispielsweise 30-50 cm des Flughafenfahrzeugs vom Flugzeug der Antrieb des Flughafenfahrzeugs automatisch auf eine ungefährliche Geschwindigkeit herabgesetzt und bei drohender Berührung des Flughafenfahrzeugs mit dem Flugzeug stillgesetzt wird.

Das Verfahren zum Betrieb eines Flughafenfahrzeugs und insbesondere zur Annäherung dieses Flughafenfahrzeugs an ein Flugzeug umfasst Schritte, die eine für Flughafenfahrzeug und Flugzeug ungefährliche und sichere Annäherung des Flughafenfahrzeugs an das Flugzeug ermöglichen.

Gemäß dieses Verfahrens greifen die Sensoren bzw. deren dem Abstand zu Flugzeugteilen und/oder -partien proportionale Ausgangssignale in den Antrieb des Flughafenfahrzeugs derart ein, dass ab einem bestimmten Abstand des Fahrzeugs vom Flugzeug der Antrieb automatisch auf eine ungefährliche Geschwindigkeit herabgesetzt und bei drohender Berührung des Fahrzeugs mit dem Flugzeug stillgesetzt wird. Somit ist eine Gefährdung automatisch ausgeschlossen.

Die Sensoren sind mit einem im Fahrerhaus des Flughafenfahrzeugs angeordneten Steuergerät verbunden. Die Sensoren steuern über dieses Steuergerät den Antrieb des Flughafen-derart, dass beim Erreichen eines ersten Abstands des Flughafenfahrzeugs vom Flugzeug nur noch eine verminderte Geschwindigkeit, vorzugsweise Schrittgeschwindigkeit, und beim Erreichen eines zweiten näheren Abstands nur noch eine weiter verminderte Geschwindigkeit, vorzugsweise Schleichgeschwindigkeit, gefahren werden kann.

Eine weitere Ausbildung des Verfahrens ist so gestaltet, dass das Steuergerät eine erste, beispielsweise grüne Lampe und eine zweite, beispielsweise rote Lampe im Fahrerhaus umfasst. Die erste, beispielsweise grüne Lampe wird bei der Aktivierung des Steuergeräts und der Sensoren auf Blinken und beim Erreichen des zweiten Abstands auf ständiges Leuchten geschaltet.

Die Aktivierung erfolgt dabei beim Erreichen des ersten Abstands des Flughafenfahrzeugs vom Flugzeug durch Unterschreiten eines dem ersten Abstand proportionalen ersten Schwellenwerts für den Abstand und damit bei einem ersten, einem dem ersten Abstand entsprechenden ersten Schwellenwert proportionalen ersten Ausgangssignal wenigstens eines Sensors.

Die zweite, beispielsweise rote Lampe wird beim Erreichen des zweiten Abstands auf Blinken und beim Stillstand des Flughafenfahrzeugs auf ständiges Leuchten geschaltet.

Das Blinken der zweiten, beispielsweise roten Lampe wird dabei beim Erreichen des zweiten Abstands des Flughafenfahrzeugs vom Flugzeug durch Unterschreiten eines dem zweiten Abstand proportionalen zweiten Schwellenwerts für den Abstand und damit bei einem zweiten, einem dem zweiten Abstand entsprechenden zweiten Schwellenwert proportionalen ersten Ausgangssignal wenigstens eines Sensors aktiviert. Das ständige Leuchten der zweiten, beispielsweise roten Lampe, kann bei unterschrittenem zweitem Abstand und Aktivierung beispielsweise einer Feststellund/oder Fahrbremse einhergehend beispielsweise mit der Abfrage eines Drehratensensors für die Umdrehung eines oder mehrerer Räder des Flughafenfahrzeugs erfolgen.

Gemäß einer weiteren, vorteilhaften Ausbildung des Verfahrens ist auf dem Fahrerhaus eine weitere, beispielsweise grüne Lampe vorgesehen, die mit der ersten, beispielsweise grünen Lampe im Fahrerhaus mitgesteuert wird.

Gemäß einer weiteren, vorteilhaften Ausbildung des Verfahrens sind am Flughafenfahrzeug Sicherheitsschaltleisten vorgesehen, die bei Berührung mit anderen Objekten, beispielsweise mit Flugzeugteilen und/oder -partien den Antrieb des Flughafenfahrzeugs sofort stillsetzen.

Gemäß einer weiteren, vorteilhaften Ausbildung des Verfahrens beträgt der zweite Abstand für die nach vorn gerichteten Sensoren 2 m und der zweite Abstand für die nach oben gerichteten Sensoren 70 cm.

Gemäß einer weiteren, vorteilhaften Ausbildung des Verfahrens beträgt der Abstand, bei dem der Antrieb des Flughafenfahrzeugs stillgesetzt wird, 5 cm.

Gemäß einer weiteren, vorteilhaften Ausbildung des Verfahrens ist am Flughafenfahrzeug ein beispielsweise roter Taster vorgesehen, mit dem von einer ersten Position, welche beispielsweise dazu vorgesehen sein kann, Gepäck aus dem Flugzeug zu entladen, des Flughafenfahrzeugs auf eine zweite Position, welche beispielsweise dazu vorgesehen sein kann, das Flugzeug mit Gepäck zu beladen, umgestellt werden kann.

Eine vorteilhafte Ausgestaltung sieht eine Ausfallerkennung der Sensoren vor, wobei bei Ausfall eines Sensors das Flughafenfahrzeug stillgelegt wird und/oder nur noch in Schritt- oder Schleich- bzw. Kriechgeschwindigkeit fortbewegt werden kann und/oder der Ausfall eines Sensors dem Fahrer des Flughafenfahrzeugs visuell angezeigt wird.

Eine besonders vorteilhafte Ausgestaltung sieht eine zumindest redundante Anordnung von Sensoren vor, wobei bei über einen Schwellenwert voneinander abweichenden Sensordaten das Flughafenfahrzeug stillgelegt wird und/oder nur noch in Schritt- oder Schleich- bzw. Kriechgeschwindigkeit fortbewegt werden kann.

Vorteile der Erfindung ergeben sich unter anderem dadurch, indem vermittels der Sensoren die Annäherung des Flughafenfahrzeugs an den für die jeweilige Ausgestaltung des Flughafenfahrzeugs vorgesehenen, entsprechenden Zugang des Flugzeugs, wie etwa bei einem Förderbandwagen die Ladeluke des Flugzeugs, erfasst und überwacht werden kann, beispielsweise um dem Fahrer eines Flughafenfahrzeugs eine Annäherung ohne Kollision zu ermöglichen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: eine Seitenansicht einer ersten Ausführung eines als Förderbandwagen ausgeführten Flughafenfahrzeugs gemäß der Erfindung,
- Fig. 2: eine verkleinerte, perspektivische Ansicht des Förderbandwagens der Fig. 1,
- Fig. 3: eine vergrößerte Ansicht eines vorderen Endbereichens des Aufbaus des Flughafenfahrzeugs aus Fig. 1, welcher dort mit A gekennzeichnet ist,
- Fig. 4: eine Seitenansicht einer zweiten Ausführung eines Förderbandwagens gemäß der Erfindung,
- Fig. 5: eine Draufsicht auf den Förderbandwagen der Fig. 4,
- Fig. 6: eine Ansicht des Förderbandwagens der Fig. 4 von vorn,
- Fig. 7: eine perspektivische Ansicht des Förderbandwagens der Fig.4,
- Fig. 8: ein Flugzeug mit Sicherheitszone,
- Fig. 9: eine perspektivische Innenansicht eines Fahrerhauses und
- Fig. 10: eine perspektivische Außenansicht eines Fahrerhauses.

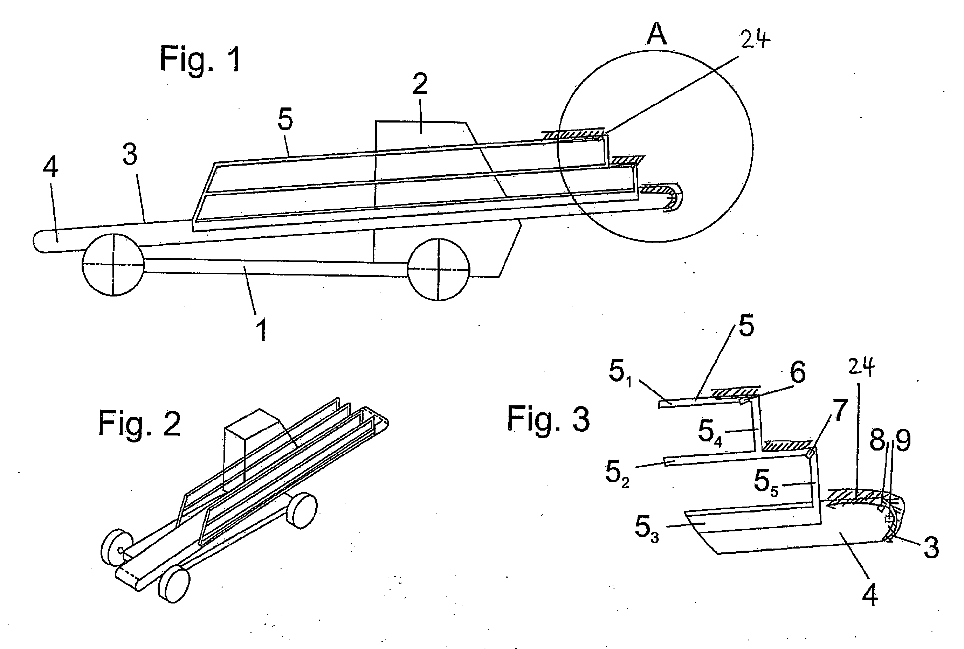

In Fig. 1 ist ein als Förderbandwagen ausgeführtes Flughafenfahrzeug dargestellt, der aus einem Fahrgestell 1, einer darauf aufgebauten Fahrerkabine 2, einem Aufbau zum Umgang mit einem Flugzeug umfassend ein auf dem Fahrgestell 1 aufgebauten Förderband 3 mit dessen Träger 4 und einem zu beiden Seiten des Förderbands 3 angeordneten Sicherheitsgeländer 5 besteht. Das Förderband 3 ist in seiner Neigung vom Fahrer im Fahrerhaus 2 verstellbar und kann daher an die Höhe der Ladeluken der Flugzeuge angepasst werden.

Der die vorderen Enden des Förderbands 3 mit Träger 4 und des Sicherheitsgeländers 5 umfassende vordere Endbereich A des Aufbaus sind in Fig. 3 vergrößert dargestellt. Das Sicherheitsgeländer 5 besteht aus einem oberen Holm 51, einem mittleren Holm 52 und einem unteren Holm 53, wobei diese Holme mit der Ebene des Förderbands 3 gleich laufen. Im vorderen Bereich des Sicherheitsgeländers 5 stützt sich der Holm 51 mittels eines ersten Vertikalholms 54 am Holm 52 und der Holm 52 mittels eines zweiten Vertikalholms 55 am Holm 53 ab, wobei der Vertikalholm 54 gegenüber dem Vertikalholm 55 etwas nach hinten versetzt ist. Der Träger 4 mit dem Förderband 3 ragt nach vorn über den Vertikalholm 55 hinaus.

Zumindest vorn am Aufbau bzw. am vorderen Endbereich A des Aufbaus, beispielsweise vorn am Förderbandträger 4 und am Sicherheitsgeländer 5, können zusätzlich Sicherheitsschaltleisten 24, so genannte Bumper angebracht sein, welche bei Berührung mit einem Objekt, beispielsweise mit einem Flugzeug, das Flughafenfahrzeug und/oder die Bewegung dessen Aufbaus zumindest in Richtung der vorher statt gefundenen Bewegung, in der es zu der Berührung kam, stilllegen.

Um nun die Gefahr einer Kollision des Förderbands 3 mit dem zu beladenden Flugzeug zu verringern, sind Sensoren 6-9 am Sicherheitsgeländer 5 und am Träger 4 angebracht, die den Abstand zu den Metallteilen des Flugzeugs feststellen und ins Fahrerhaus 2 melden. Dieser Abstand kann beispielsweise 30-50 cm betragen. Wird dieser Abstand unterschritten, kann der Förderbandwagen und/oder das Förderband automatisch derart gesteuert werden, dass nur noch eine verminderte Fahrgeschwindigkeit und/oder Hebegeschwindigkeit möglich ist. Diese Sensoren haben eine Hauptmelderichtung, die der Längsachse der Sensoren entspricht. Die Längsachse des an der Verbindungsstelle der Holme 51, 54 angebrachte Sensors 6 bildet zur Förderbandfläche einen Winkel von 30°; die Längsachse des an der Verbindungsstelle der Holme 52, 55 angebrachte Sensors 7 bildet zur Förderbandfläche einen Winkel von 45°; die Längsachse des am Vorderende des Trägers 4 angebrachten Sensors 8 bildet zur Förderbandfläche einen Winkel von 60°, und die Längsachse des unter dem Sensor 8 am Vorderende des Trägers 4 angebrachten Sensors 9 bildet zur Förderbandfläche einen Winkel von 0°.

Diese Sensoren 6-9 können vorzugsweise mit Ultraschall arbeiten und sind elektrisch mit dem Fahrerhaus 2 verbunden. Mit den Sensoren ist dort ein Steuergerät verbunden, das Anzeige- oder akustische Geräte umfassen kann. Mit dem Steuergerät kann der Fahrer den Abstand zu Flugzeugteilen und/oder -partien, beispielsweise die Nähe der Metallteile des Flugzeugs, feststellen. Beispielsweise kann der Abstand zu Flugzeugteilen und/oder -partien, beispielsweise die Nähe von Metallteilen durch die Tonhöhe von Warnsignalen, angegeben werden.

Zusätzlich zu den Sensoren 6-9 können an sich bekannte Sicherheitsschaltleisten 24 am Sicherheitsgeländer 5 oder Träger 4 angebracht sein. Wenn diese Schaltleisten 24 mit dem Flugzeug in Kontakt bekommen, werden der Förderbandwagen und das Förderband automatisch stillgesetzt.

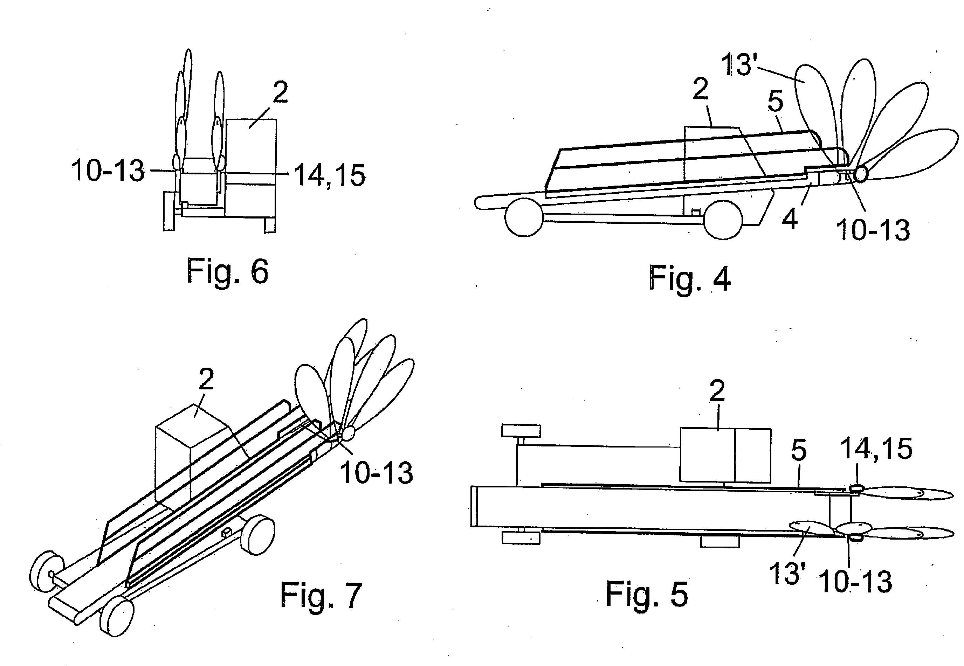

In den Figuren 4-7 ist eine weitere Ausführung eines Förderbandwagens dargestellt, der im Prinzip wie der der Figuren 1-3 aufgebaut ist.

Hier sind jedoch sechs Sensoren 10-15 an beiden Seiten des Trägers 4 eingebaut, und zwar die Sensoren 10-13 auf der rechten Seite und die Sensoren 14, 15 auf der linken Seite des Trägers 4. Die dargestellten Keulen geben dabei den Neigungswinkel der Sensorlängsachsen an, vorzugsweise 25°, 50° und 80°. Ein Sensor 13 ist mit seiner Längsachse (Keule 13') so gerichtet, dass er einen Neigungswinkel von 110° besitzt. Dieser Sensor wirkt dann, wenn überhängende Teile des Flugzeugs, beispielsweise Gondeln von Triebwerken, wie etwa Düsentriebwerken, den Zugang zu Ladeluken des Flugzeugs erschweren.

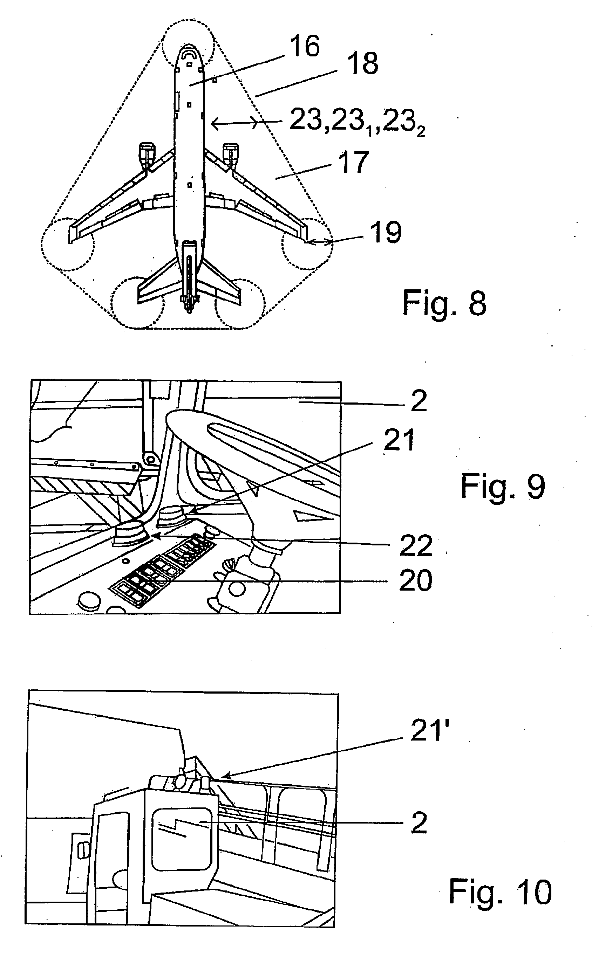

Die Figuren 8-10 zeigen an, wie eine Annäherung des Flughafenfahrzeugs an ein Flugzeug praktikabel ausgeführt werden kann.

In Fig. 8 ist ein Flugzeug 16 von einer Sicherheitszone 17 umgeben, deren rautenförmige Kontur eine Sicherheitsstopplinie 18 bildet. Dabei hat die Sicherheitsstopplinie 18 einen bestimmten Abstand 19, beispielsweise 7,5 m, von den äußersten Stellen des Flugzeugs 16, wie die eingezeichneten Kreise zeigen.

Wie bereits erwähnt wurde, ist im Fahrerhaus 2 nach Fig. 9 ein mit den Sensoren verbundenes Steuergerät vorhanden. Dieses Steuergerät 20 muss in der Sicherheitszone 17 aktiviert sein und darf erst beim Verlassen dieser Sicherheitszone 17 deaktiviert werden. Dabei kann die Aktivierung in verschiedener Weise erfolgen, beispielsweise durch Betätigung eines Schalters, vorzugsweise eines am Träger 4 des Förderbands 3 vorgesehenen, grünen Schalters, oder durch Anheben des Trägers 4. Das Steuergerät 20 wertet die Sensorsignale aus und umfasst nach Fig. 9 eine grüne Lampe 21 und eine rote Lampe 22 sowie nach Fig. 10 eine weitere auf dem Fahrerhaus 2 montierte, grüne Lampe 21'. Die Lampen 21, 21', 22 dienen einerseits zur Visualisierung für den Fahrer im Fahrerhaus 2 und andererseits zur Erkennung bzw. Überprüfung für anderes Aufsichts- und Kontrollpersonal. Mit der Aktivierung des Steuergeräts 20 werden auch die Sensoren und die erwähnten Schaltleisten aktiviert. Ein aktiviertes Steuergerät 20 ist daran zu erkennen, dass die grüne Lampe 21 im Fahrerhaus 2 aufleuchtet und die grüne Lampe 21' auf dem Fahrerhaus 2 blinkt.

Nach der Aktivierung des Steuergeräts 20 wird der Antrieb des Förderbandwagens derart automatisch gesteuert, dass dieser nur noch mit verminderter Geschwindigkeit, vorzugsweise mit Schrittgeschwindigkeit, beispielsweise 6 km/h, gefahren werden kann. Die Sensoren werden aktiviert und erkennen Hindernisse in ihrem Sensorbereich, beispielsweise ab einem Abstand 23 (Fig. 8) von etwa 2 m.

Die nach vorn ausgerichteten Sensoren sind mit zwei Messbereichen versehen:
- der erste Messbereich wird bei einem Hindernis im Abstand 23 von diesen 2 m aktiviert; wird ein Hindernis erkannt, wird die Geschwindigkeit des Förderbandwagens noch weiter begrenzt, und zwar von der Schrittgeschwindigkeit auf Schleichgeschwindigkeit, beispielsweise 1 km/h; in diesem Zustand blinkt die rote Lampe 22 in der Fahrerkabine, während die grünen Lampen 21, 21' ständig leuchten;
- beim Erreichen des zweiten Messbereichs wird der Förderbandwagen bei einem Abstand 231 von beispielsweise 5 cm gestoppt; in diesem Zustand leuchtet die rote Lampe 22 dauerhaft; der Förderbandwagen kann nicht mehr nach vorn bewegt werden, und der Träger 4 kann nicht mehr angehoben werden; der Förderbandwagen kann nur noch rückwärts vom Flugzeug 16 weg fahren.

Die nach oben gerichteten Sensoren haben ebenfalls zwei Messbereiche:
- der erste Messbereich wird bei einem Hindernis im Abstand 232 von beispielsweise 70 cm aktiviert; wird ein Hindernis in diesem Abstand 232 erkannt, wird die Geschwindigkeit des Förderbandwagens ebenfalls weiter begrenzt, und zwar von der Schrittgeschwindigkeit auf Schleichgeschwindigkeit; die rote Lampe 22 blinkt, während die grünen Lampen 21, 21' ständig leuchten;
- beim Erreichen des zweiten Messbereichs wird der Förderbandwagen bei einem Abstand 231 von beispielsweise 5 cm automatisch gestoppt; in diesem Zustand leuchtet die rote Lampe 22 dauerhaft; der Förderbandwagen kann nicht mehr nach vorn bewegt werden, und der Träger 4 kann nicht mehr angehoben werden; der Förderbandwagen kann nur noch rückwärts vom Flugzeug 16 weg fahren; dabei ist ein Rückwärtsfahren des Förderbandwagens immer möglich, und das Laufen des Förderbands 3 bleibt unbeeinflusst.

An den vorderen Enden des Sicherheitsgeländers 5 können, wie erwähnt, Sicherheits-Schaltleisten, so genannte Bumper, befestigt sein, die bei Berührung mit anderen Bauteilen sofort alles stoppen. Ein Vorwärtsfahren des Förderbandwagens und ein Anheben des Trägers 4 wird unterbunden; es sind nunmehr ein Rückwärtsfahren des Förderbandwagens und ein Absenken des Trägers 4 möglich.

Für den Betriebsablauf am Flugzeug ist es vorteilhaft, wenn die "Half"-Position (dauerhaft rotes Licht) überbrückt werden kann. Das ist beispielseise dann der Fall, wenn das Förderband 3 am Flugzeug von einer ersten Position "Gepäck aus dem Flugzeug entladen" auf eine zweite Position "Flugzeug mit Gepäck beladen" umgestellt werden soll. In der ersten Position ist dabei das Förderband 3 unterhalb der Ladeluke des Flugzeugs anzuordnen, während in der zweiten Position das Förderband 3 in die Ladeluke hinein gefahren werden muss. Diese Umstellung kann vom Fahrer beispielsweise durch Drücken eines roten Tasters (Totmann-Schaltung, nicht dargestellt) des Steuergeräts hergestellt werden. Dies erfordert zwar zusätzliche Aufmerksamkeit vom Fahrer, ist aber für den schnellen, reibungslosen Ablauf vorteilhaft. Beim Loslassen des roten Tasters bleibt sofort alles stehen.

Beim Drücken des roten Tasters fährt der Förderbandwagen ohne Gasgeben im Leerlauf langsam nach vorn. Dies gilt ebenso beim Blinken der roten Lampe 22. Dann kann das Förderband 3 im Leerlauf ebenfalls vorwärts fahren. Ohne Drücken des roten Tasters bleibt der Förderbandwagen beim Erreichen der geschilderten zweiten Messbereiche der Sensoren stehen.

## Patentansprüche

1. Verfahren zum Betrieb, insbesondere zur Annäherung eines Flughafenfahrzeugs an ein Flugzeug, welches Flughafenfahrzeug mit einem Aufbau zum Umgang mit einem Flugzeug aufweist, wobei zumindest an einem vorderen Endbereich (A) des Aufbaus Sensoren (6-9, 10-15) zur Feststellung des Abstands zu Flugzeugteilen angebracht sind, und die Sensoren (6-9, 10-15) in den Antrieb des Flughafenfahrzeugs derart eingreifen, dass bei Unterschreitung eines bestimmten Abstands (30-50 cm) des Flughafenfahrzeugs vom Flugzeug der Antrieb automatisch auf eine ungefährliche Geschwindigkeit herabgesetzt und bei drohender Berührung des Flughafenfahrzeugs mit dem Flugzeug stillgesetzt wird, und die Sensoren mit einem im Fahrerhaus (2) des Flughafenfahrzeugs angeordneten Steuergerät (16) verbunden sind und über dieses Steuergerät den Antrieb des Flughafenfahrzeugs derart steuern, dass beim Erreichen eines ersten Abstands (19) des Flughafenfahrzeugs vom Flugzeug nur noch eine verminderte Geschwindigkeit, vorzugsweise Schrittgeschwindigkeit, und beim Erreichen eines zweiten näheren Abstands (23, 231, 232) nur noch eine weitere verminderte Geschwindigkeit, vorzugsweise Schleichgeschwindigkeit, gefahren wird.

2. Verfahren nach Anspruch 1,
**dadurch gekennzeichnet,**
**dass** das Steuergerät (16) eine erste, vorzugsweise grüne Lampe (21) und eine zweite, vorzugsweise rote Lampe (22) im Fahrerhaus (2) umfasst,
die erste, vorzugsweise grüne Lampe (21) beim Erreichen des ersten Abstands (19) auf Blinken und beim Erreichen des zweiten Abstands (19) auf ständiges Leuchten geschaltet wird, und
die zweite, vorzugsweise rote Lampe (22) beim Erreichen des zweiten Abstands (231, 232) auf Blinken und beim Stillstand des Flughafenfahrzeugs auf ständiges Leuchten geschaltet wird.

3. Verfahren nach Anspruch 2,
**dadurch gekennzeichnet,**
**dass** auf dem Fahrerhaus (2) eine weitere, vorzugsweise grüne Lampe (21') vorgesehen ist, die mit der ersten, bevorzugt grünen Lampe (21) im Fahrerhaus (2) mitgesteuert wird.

4. Verfahren nach einem der Ansprüche 1 bis 3,
**dadurch gekennzeichnet,**
**dass** der zweite Abstand (23) für nach vorn gerichtete Sensoren 2 m und der zweite Abstand (231) für nach oben gerichteten Sensoren 70 cm beträgt.

5. Verfahren nach einem der Ansprüche 1 bis 4,
**dadurch gekennzeichnet,**
**dass** der Abstand, bei dem der Antrieb des Flughafenfahrzeugs stillgesetzt wird, 5 cm beträgt.

6. Verfahren nach einem der Ansprüche 1 bis 5,
**dadurch gekennzeichnet,**
**dass** am Flughafenfahrzeug ein roter Taster vorgesehen ist, mit dem von einer ersten Position (Gepäck aus dem Flugzeug entladen) des Flughafenfahrzeugs auf eine zweite Position (Flugzeug mit Gepäck beladen) umgestellt werden kann.

7. Verfahren nach einem der Ansprüche 1 bis 6
**dadurch gekennzeichnet,**
**dass** am Flughafienfahrzeug Sichertieits-Schaltleisten (24) vorgesehen sind, die bei Berührung mit einem Objekt zumindest den Antrieb des Flughafenfahrzeugs sofort stillsetzen.

## Claims

1. A method for the operation, in particular, for the approach of an airport vehicle to an aircraft, which has an airport vehicle with a structure for handling an aircraft, wherein sensors (6-9, 10-15) are affixed at least on a front end area (A) of the structure for determining the distance to aircraft parts, and the sensors (6-9, 10-15) engage in the drive of the airport vehicle such that when it falls below a certain distance (30-50 cm) of the airport vehicle from the aircraft the drive is automatically reduced to a safe speed and in the case of imminent contact of the airport vehicle with the aircraft is shutdown, and the sensors are connected to a control device (16) arranged in the driver's cab (2) of the airport vehicle and by means of this control device control the drive of the airport vehicle such that upon reaching a first distance (19) of the airport vehicle from the aircraft It is run only at reduced speed, preferably a walking speed, and upon reaching a second closer distance (23, 231, 232) it is run only at a further reduced speed, preferably a crawling speed.

2. A method according to claim 1,
**characterized in**
**that** the control device (16) comprises a first, preferably green lamp (21) and a second, preferably red lamp (22) in the driver's cab (2), the first, preferably green lamp (21) upon reaching the first distance (19) Is switched to flashing and upon reaching the second distance (19) is switched to constant illumination, and
the second, preferably red lamp (22) upon reaching the second distance (231, 232) is switched to flashing and when the airport vehicle stops is switched to constant Illumination.

3. A method according to claim 2
**characterized in**
**that** a further preferably green lamp (21') Is provided on the driver's cab (2), which is controlled together with the first, preferably green lamp (21) in the driver's cab (2).

4. A method according to one of claims 1 to 3,
**characterized in**
**that** the second distance (23) for forward-directed sensors is 2 m and the second distance (231) for upward-directed sensors is 70 cm.

5. A method according to one of claims 1 to 4,
**characterized in**
**that** the distance, at which the drive of the airport vehicle is stopped, is 5 cm.

6. A method according to one of claims 1 to 5,
**characterized in**
**that** a red button is provided on the airport vehicle, with which a change can be made from a first position (luggage unloaded from the aircraft) of the airport vehicle to a second positon (aircraft loaded with luggage).

7. A method according to one of claims 1 to 6,
**characterized in**
**that** safety strips (24) are provided on the airport vehicle, which immediately shutdown at least the drive of the airport vehicle upon contact with an object.

## Revendications

1. Procédé pour le fonctionnement, en particulier pour approcher d'un avion un véhicule aéroportuaire, lequel véhicule aéroportuaire comporte une structure permettant de s'accoler à un avion, des capteurs (6-9, 10-15) destinés à constater la distance par rapport aux parties de l'avion étant montés sur au moins une zone d'extrémité avant (A) de ladite structure, et lesdits capteurs (6-9, 10-15) intervenant dans le système d'entraînement du véhicule aéroportuaire de telle sorte que lorsque la distance entre le véhicule aéroportuaire et l'avion est inférieure à une distance déterminée (30-50 cm), le système d'entraînement est automatiquement amené à une vitesse non dangereuse et est arrêté dès que le véhicule aéroportuaire menace d'entrer en contact avec l'avion, et les capteurs sont reliés à un dispositif de commande (16), disposé dans la cabine (2) du véhicule aéroportuaire, et, par l'intermédiaire de ce dispositif de commande, commandent le système d'entraînement du véhicule aéroportuaire de telle sorte que lorsqu'une première distance (19) entre le véhicule aéroportuaire et l'avion est atteinte le véhicule aéroportuaire peut seulement encore rouler avec une vitesse diminuée, de préférence la vitesse de marche d'un piéton, et lorsqu'une deuxième distance (23, 231, 232) plus rapprochée est atteinte, le véhicule aéroportuaire peut seulement rouler avec une vitesse encore davantage réduite, de préférence la vitesse de marche lente d'un piéton.

2. Procédé selon la revendication 1, **caractérisé en ce que** le dispositif de commande (16) comporte une première lampe (21), de préférence verte, et une deuxième lampe (22), de préférence rouge, dans la cabine (2),
la première lampe (21), de préférence verte, étant amenée à clignoter lorsque la première distance (19) est atteinte, et restant allumée en permanence lorsque la deuxième distance (19) est atteinte, et
la deuxième lampe (22), de préférence rouge, étant amenée à clignoter lorsque la deuxième distance (231, 232) est atteinte, et restant allumée en permanence lorsque le véhicule aéroportuaire est à l'arrêt.

3. Procédé selon la revendication 2, **caractérisé en ce que** sur la cabine (2) est prévue une lampe supplémentaire (21'), de préférence verte, qui est commandée conjointement à la première lampe (21), de préférence verte, dans la cabine (2).

4. Procédé selon l'une quelconque des revendications 1 à 3, **caractérisé en ce que** la deuxième distance (23) est de l'ordre de 2 m pour les capteurs dirigés vers l'avant et la deuxième distance (231) est de l'ordre de 70 cm pour les capteurs dirigés vers le haut.

5. Procédé selon l'une quelconque des revendications 1 à 4, **caractérisé en ce que** la distance à laquelle le système d'entraînement du véhicule aéroportuaire est arrêté, est une distance de 5 cm.

6. Procédé selon l'une quelconque des revendications 1 à 5, **caractérisé en ce que** sur le véhicule aéroportuaire est prévu un bouton poussoir rouge, par lequel le véhicule aéroportuaire peut être transposé d'une première position (déchargement des bagages hors de l'avion) vers une deuxième position (chargement des bagages dans l'avion).

7. Procédé selon l'une quelconque des revendications 1 à 6, **caractérisé en ce que** sur le véhicule aéroportuaire sont prévues des baguettes de commutation de sécurité (24) qui, dès l'entrée en contact avec un objet, arrêtent immédiatement au moins le système d'entraînement du véhicule aéroportuaire.
